**Europäisches Patentamt**

**European Patent Office**

**Office européen des brevets**

(19)

(11) Publication number: **0 076 156**
**B1**

(12)

# EUROPEAN PATENT SPECIFICATION

(45) Date of publication of patent specification: **03.06.87**

(51) Int. Cl.⁴: **F 16 H 57/02**

(21) Application number: **82305148.7**

(22) Date of filing: **29.09.82**

(54) **Air breather structure for oil seals in an automatic transmission.**

(30) Priority: **30.09.81 JP 155564/81**

(43) Date of publication of application:
**06.04.83 Bulletin 83/14**

(45) Publication of the grant of the patent:
**03.06.87 Bulletin 87/23**

(84) Designated Contracting States:
**DE FR GB**

(56) References cited:
**DE-C- 855 783**
**GB-A-2 058 994**

(73) Proprietor: **FUJI JUKOGYO KABUSHIKI KAISHA**
**7-2 Nishishinjuku 1-chome Shinjuku-ku**
**Tokyo (JP)**

(72) Inventor: **Kitade, Nobumitsu**
**4-18-1-304 Ebisu Shibuya-ku**
**Tokyo (JP)**

(74) Representative: **Eyles, Christopher Thomas et al**
**BATCHELLOR, KIRK & EYLES 2 Pear Tree Court**
**Farringdon Road**
**London, EC1R 0DS (GB)**

Courier Press, Leamington Spa, England.

## Description

The present invention relates to an air breather structure for oil seals in an automatic transmission including an automatic transmission device adjacent to a case for a final reduction device, and more particularly, but not exclusively, to such a breather structure for an automatic transmission device in a four-wheel drive vehicle.

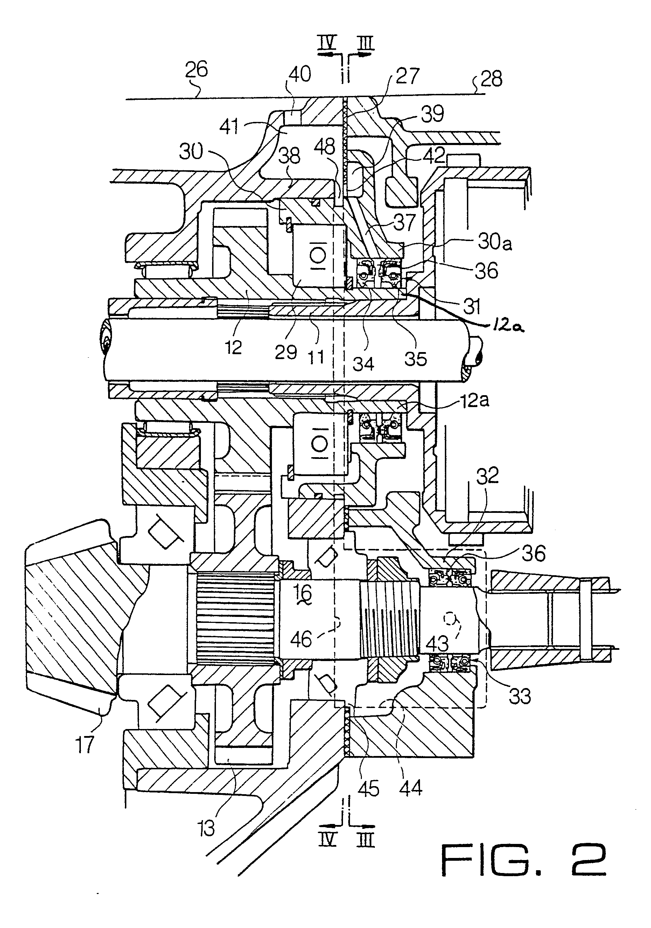

Automatic transmission devices are lubricated with an automatic transmission fluid (ATF) and the final reduction devices including differentials are lubricated with a differential oil different from the ATF in quality. In such an automatic transmission, the two devices are separated by a gasket and an oil seal is provided around a rotating shaft extending across the gasket in order to prevent inter-mixing of the oils. In an automatic transmission device for a four-wheel drive automobile, two rotating shafts extend across the gasket. One of the rotating shafts is a hub of a reduction drive gear and the other is a drive pinion shaft in the final reduction device which extends in the opposite direction for transmitting the power of the engine to wheels of the vehicle driven through the final reduction device. Therefore, an oil seal is provided around each of the rotating members. In such a case, by way of explanation referring to Figure 2, described more fully hereinafter, each oil seal is provided with a pair of spaced sealing members (34, 35) and the space between those members is communicated with the atmosphere through an air breather passage (37, 42, 40) to ensure the sealing effect. In an air breather structure employing piping, a space for the pipe system must be provided in the transmission and troubles arise, such as leakage from pipe connections, introduction of water into the piping, and breakage of the piping. It has been proposed to provide an air breather passage in the junction of the final reduction case and the automatic transmission case. However, since a plurality of oil passages are formed in the junction of the automatic transmission device, it is difficult to provide an air breather passage at that point.

Accordingly, it is an object of the present invention to provide an air breather structure which can be simply provided in the junction by using cavities and grooves which are inherently formed in both cases.

According to this invention we provide an air breather structure for oil seals in an automatic transmission wherein each oil seal comprises a pair of sealing members with a space therebetween, and the automatic transmission has a final reduction device provided in a differential case and an automatic transmission device provided in an automatic transmission case the cases being coupled together end-to-end with the interposition of a gasket for transmitting the output of the automatic transmission to the wheels of a four-wheel drive, with the oil seals provided around the respective rotating shafts respectively; characterised in that the space of a first of the oil seals is vented to atmosphere through a first passage provided in a holding member communicating with a recess in the holding member communicating with a first opening in the gasket, communicating with venting means provided in an upper portion of one of the cases thus communicating the recess with the atmosphere; and the space of the second oil seal is vented to atmosphere through a second passage extending through a holding portion and the other case, said second passage communicating with a recess in said other case, communicating with a second opening in the gasket, communicating via conduit means with the venting means.

The present invention will be more apparent from the following description of one embodiment thereof, given by way of example only, reference being made to the accompanying drawings, in which

Figure 1 is a schematic view showing a transmission system for a four-wheel automobile in which an air breather structure in accordance with the present invention is used;

Figure 2 is a sectional view showing the air breather structure;

Figure 3 is a sectional view taken along the line III—III of Figure 2;

Figure 4 is a sectional view taken along the line IV—IV of Figure 2; and

Figure 5 is a front view of the gasket employed.

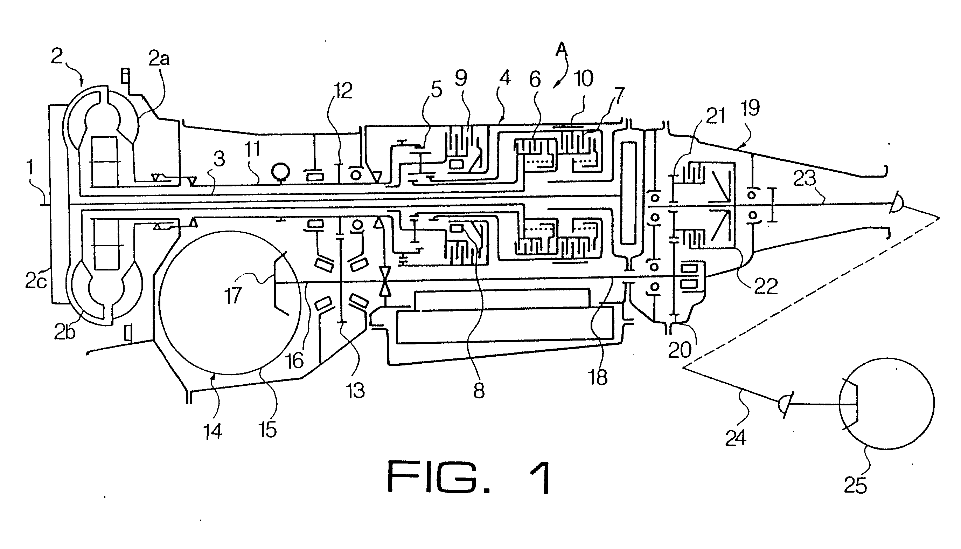

Referring to Figure 1, numeral 1 designates a crankshaft of an internal combustion engine (not shown) mounted on a front portion of a vehicle. The crankshaft 1 of the engine is operatively connected with a torque converter 2 of an automatic transmission A.

The automatic transmission A comprises the torque converter 2, an automatic transmission device 4, and a final reduction device 14 for front wheels.

The torque converter 2 comprises a pump impeller 2a and a turbine 2b. The pump impeller 2a is in direct connection with the engine crankshaft 1 through a drive plate 2c. A turbine shaft 3 is extended from the turbine 2b to the automatic transmission device 4.

The automatic transmission device A comprises a planetary gear 5, clutches 6 and 7 for selectively transmitting the output of the turbine shaft 3 to the planetary gear 5, a one-way clutch 8, a brake 9 and brake band 10 for selectively locking the elements of the planetary gear 5.

The output of the automatic transmission device is transmitted to an output shaft 11 on which a reduction drive gear 12 is securely mounted and which in turn engages with a driven gear 13. The driven gear 13 is securely mounted on a shaft 16 which is integral with a drive pinion 17. The drive pinion 17 engages with a crown gear 15 of the final reduction device 14 for the front wheels. The shaft 16 is connected to a transfer drive shaft 18 which extends rearwardly and is connected to a first transfer gear 20 of a transfer device 19. The first transfer gear 20 is engaged with a second transfer gear 21. The second transfer gear 21 is rotatably mounted on a rear drive shaft 23. A fluid pressure controlled friction clutch 22 of the type of multiple-disc is mounted on the rear drive shaft 23 for engaging the gear 21 with the shaft 23. The rear drive shaft 23 is further operatively connected to a final reduction device 25 for rear wheels through a propeller shaft 24. Thus, rear wheels are driven by engaging the clutch 22 as well as front wheels.

Referring to Figure 2, the final reduction device 14 has a differential case 26 and the automatic transmission device 4 has a case 28 which is coupled to case 26 through a gasket 27 so as to separate the interiors of the cases in liquid-tight manner. The reduction drive gear 12 is rotatably supported by a ball bearing 29 secured on a hub 12a extending from the gear 12 and into the automatic transmission device. The outer race of the bearing 29 is securely mounted in a holder 30, which is mounted in a cylindrical portion 38 of the differential case 26 and which has a cylindrical projection 30a extending into the case 28. In the cylindrical space formed in the case 28 between the hub 12a and the holder 30, a first oil seal 31 is located. A cylindrical holding portion 32 is formed in the case 28 and a second oil seal 33 is provided in the space between the holding portion 32 and the shaft 16 of the drive pinion 17. Each oil seal 31 and 33 comprises a pair of spaced sealing members 34 and 35 between which a space 36 is defined. The space 36 is in communication with the atmosphere as will be described hereinafter.

An air breather passage 37 is formed in the holder 30 so as to communicate the space 36 of the oil seal 31 with a recess 39 formed in an upper portion of the holder. The recess 39 opens at the end wall of the automatic transmission case 28 facing the end of the differential case 26.

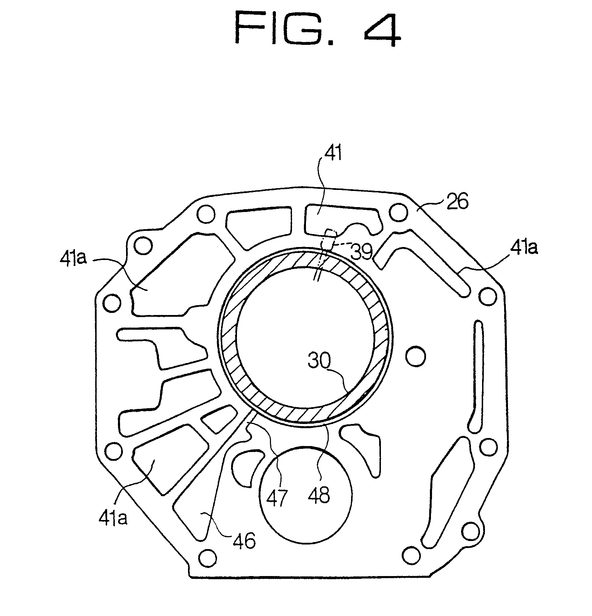

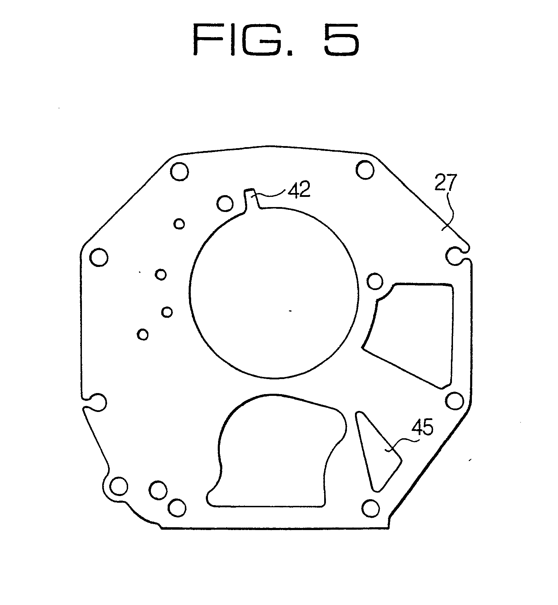

As shown in Figure 4, a number of open cavities 41a are formed in the end of the differential case 26 to decrease the weight of the case. One of those cavities 41a is used as an air breather recess 41. The air breather recess 41 communicates with the recess 39 through an opening 42 provided in the gasket 27 as shown in Figure 5. The recess 41 is communicated with the atmosphere through a hole 40 (Figure 2) formed in the case 26. Thus, the space 36 of the oil seal 31 is communicated with the atmosphere through the passage 37, recesses 39 and 41 and the hole 40.

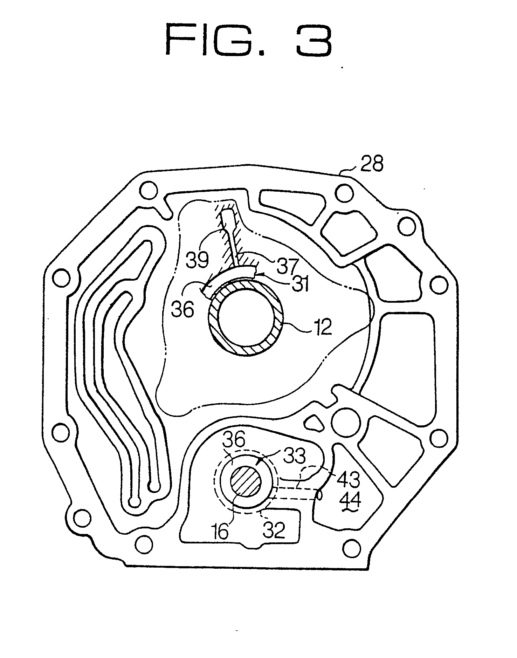

Referring now to Figure 3, the space 36 of the oil seal 33 is in communication with a recess 44 through a horizontal passage 43 formed in the automatic transmission case 28. The recess 44 is one of a number of open cavities formed in the case 28. The recess 44 is communicated with a recess 46 (Figure 4) of the case 26 through an opening 45 (Figure 5) formed in the gasket 27. The recess 46 is communicated via a passage 47 with an annular groove 48 (Figure 4) formed in the peripheral portion of the holder 30. The annular groove 48 is communicated with the recess 39 at an end portion of the cylindrical portion 38 as shown in Figure 2. Thus, the spaces 36 in the oil seals 31 and 33 are communicated with the atmosphere through passages provided in the junction of the cases 26 and 28 as described below.

The space 36 of the oil seal 31 is communicated with the atmosphere via the passage 37, recess 39, opening 42 of gasket 27, recess 41 and hole 40. On the other hand, the space 36 of the oil seal 33 is communicated with the atmosphere via passage 43, recess 44, opening 45 of the gasket, recess 46, passage 47, annular groove 48, and recess 39. Thus, the space of each oil seal is at atmospheric pressure thereby to prevent leakage of oil in one of the cases to the other case and vice versa.

From the foregoing it will be understood that in the arrangement described an air breather structure is provided which comprises upwardly extending passages provided along the junction so as to communicate with the atmosphere via a hole provided in an upper portion of a case. The passages are formed by cavities inherently provided in cases for decreasing the weight. Thus, the passage can be formed without substantially altering the structures of the differential case and the automatic transmission case and without increasing length of passage.

**Claims**

1. An air breather structure for oil seals in an automatic transmission wherein each oil seal (31, 33) comprises a pair of sealing members (34, 35) with a space (36) therebetween, and the automatic transmission has a final reduction device (12, 13) provided in a differential case (26) and an automatic transmission device (A) provided in an automatic transmission case (28), the cases being coupled together end-to-end with the interposition of a gasket (27), at least two rotating shafts (11, 16) extending across the gasket for transmitting the output of the automatic transmission to the wheels of a four-wheel drive, with the oil seals provided around the respective rotating shafts respectively; characterised in that the space (36) of a first (31) of the oil seals is vented to atmosphere through a first passage (37) provided in a holding member (30), communicating with a recess (39) in the holding member (30), communicating with a first opening (42) in the gasket, communicating with venting means (40) provided in an upper portion of one of the cases (26, 28), thus communicating the recess (39) with the atmosphere; and the space (36) of the second oil seal (33) is vented to atmosphere through a second passage (43) extending through a holding portion (32) and the other case, said second passage communicating with a recess (44) in said other case, communicating with a second opening (45) in the gasket, communicating via conduit means with the venting means (40).

2. An air breather structure according to claim 1, wherein the holding member (30) is a holder secured to the differential case (26) for supporting a reduction drive gear (12) of the automatic transmission (A) and the first oil seal is provided in the space between the holding member (30) and a hub (12a) of the reduction drive gear (12), and the recess (39) is formed in a portion of the holding member (30) extending into the coupling end of the automatic transmission case (28).

3. An air breather structure according to claim 1 or claim 2, wherein the second oil seal (33) is provided between a shaft (16) of a drive pinion (17) for driving wheels of the vehicle and a cylindrical holding portion (32) formed in the automatic transmission case (28).

4. An air breather structure according to claim 1, 2 or 3, wherein said conduit means includes a cavity (46) communicating with said second opening (45) in the gasket and an annular groove (48) formed in the differential case (26) at a coupling end portion thereof.

## Patentansprüche

1. Entlüftungsanlage für Öldichtungen in einem automatischen Getriebe, bei dem jede Öldichtung (31, 33) ein Paar Dichtungen (34, 35) mit einem dazwischen liegenden Raum (36) umfaßt und das automatische Getriebe eine in einem Differentialgehaüse (26) vorgesehene End-Untersetzungseinrichtung (12, 13) und eine in einem Automatikgetriebegehäuse (28) vorgesehene Automatikgetriebeeinrichtung (A) hat, wobei die Gehäuse mit Zwischenlage einer Dichtung (27) End-zu-End zusammengekoppelt sind, wenigstens zwei rotierende Wellen (11, 16) für die Übertragung der Ausgangsleistung des automatischen Getriebes auf die Räder einer Vierrad-Antriebs durch die Dichtung reichen und die Öldichtungen jeweils um die betreffenden rotierenden Wellen vorgesehen sind, dadurch gekennzeichnet, daß der Raum (36) einer ersten Öldichtung (31) zur Atmosphäre durch einen in einem Halteteil (30) vorgesehenen ersten Kanal (37) entlüftet ist, der über eine Ausnehmung (39) in dem Halteteil (30) und eine erste Öffnung (42) in der Dichtung mit einer in einem Oberteil eines der Gehäuse (26, 28) vorgesehenen Öffnung (40) in Verbindung steht und somit die Ausnehmung (39) mit der Atmosphäre verbunden ist, und der Raum (36) der zweiten Öldichtung (33) zur Atmosphäre durch einen zweiten Kanal (43) entlüftet ist, der sich durch ein Halteteil (32) und das andere Gehäuse erstreckt und über eine Ausnehmung (44) in diesem anderen Gehäuse, eine zweite Öffnung (45) in der Dichtung und Leitungen mit der Öffnung (40) in Verbindung steht.

2. Entlüftungsanlage nach Anspruch 1, bei der das Halteteil (30) ein Halter ist, der zur Abstützung eines Untersetzungsantriebsrades (12) des automatischen Getriebes (A) an dem Differentialgehäuse (26) angebracht ist, und die erste Öldichtung in dem Raum zwischen dem Halteteil (30) und einer Nabe (12a) des Untersetzungsantriebsrades (12) vorgesehen ist und die Ausnehmung (39) in einem Teil des Halteteils (30) ausgebildet ist, der sich in das Kupplungsende des Automatikgetriebegehäuses (28) erstreckt.

3. Entlüftungsanlage nach Anspruch 1 oder Anspruch 2, bei der die zweite Öldichtung (33) zwischen einer Welle (16) eines Antriebskegelrades (17) für den Radantrieb des Fahrzeugs und einem in dem Automatikgetriebegehäuse (28) ausgebildeten, zylindrischen Halteteil (32) vorgesehen ist.

4. Entlüftungsanlage nach Anspruch 1, 2 oder 3, bei der die genannten Leitungen einen mit der zweiten Öffnung (45) in der Dichtung in Verbindung stehenden Holhraum (46) und eine in dem Differentialgehäuse (26) an dessen Kupplungsende ausgebildete ringförmige Rille (48) umfassen.

## Revendications

1. Structure d'aération pour les joints d'huile d'une transmission automatique où chaque joint d'huile (31, 33) comprend deux éléments d'étanchéité (34, 35) séparés par un espace; tandis que la transmission automatique comporte un dispositif réducteur final ou de sortie (12, 13) logé dans un carter de différentiel (26), et un dispositif de transmission automatique (A) logé dans un carter (28), ces deux carters étant reliés ensemble bout à bout avec interposition d'un joint (27), que traversent, au moins, deux arbres rotatifs (11, 16), pour transmettre la force motrice de sortie de la transmission automatique aux roues d'un véhicule à quatre roues motrices, lesdits joints d'huile étant disposés respectivement autour des arbres rotatifs, caractérisée en ce que l'espace (36) du premier (31) des joints d'huile communique avec l'atmosphère par un premier canal (37), prévu dans un organe de support (30), communiquant avec une cavité (39) de l'organe de support (30), qui communique avec une première ouverture (42) du joint, communiquant avec des moyens d'aération (40) prévus dans la partie supérieure de l'un des deux carters (26, 28), faisant ainsi communiquer la cavité (39) avec l'atmosphère; tandis que l'espace (36) du second joint d'huile (33) est mis en communication avec l'atmosphère par un second canal (43) traversant une partie de support (32) et l'autre carter, ce second canal communiquant avec une cavité (44) dudit second carter, qui communique avec une seconde ouverture (45) du joint, communiquant par des conduits avec les moyens d'aération (40).

2. Structure d'aération selon la revendication 1, caractérisée en ce que l'organe de support (30) est fixé au carter de différentiel (26) afin de supporter le pignon (12) d'un réducteur de la transmission automatique (A), cependant que le premier joint d'huile est logé dans l'espace compris entre l'organe de support (30) et un moyeu (12a) de l'engrenage réducteur (12), ladite cavité (39) étant formée dans une partie de l'organe de support (30) s'étendant dans l'extrémité de couplage du carter (28) de la transmission automatique.

3. Structure d'aération selon la revendication 1 ou 2, caractérisée en ce que le second joint d'huile (33) est disposé entre l'arbre (16) d'un pignon menant (17) qui entraîne les roues du véhicule, et une partie cylindrique de support (32) formée dans le carter (28) de la transmission automatique.

4. Structure d'aération selon la revendication 1,

7

**0 076 156**

8

2 ou 3, caractérisée en ce que les conduits comprennent une cavité (46) communiquant avec ladite seconde ouverture (45) du joint, et une rainure annulaire (48) formée dans le carter de différrentiel (26), à l'extrémité de couplage de celui-ci.

FIG. 1

FIG. 2

0 076 156

2

# FIG. 3

# FIG. 4

# FIG. 5